(19) Europäisches Patentamt
European Patent Office
Office européen des brevets

(11) EP 2 743 724 B1

(12) **EUROPÄISCHE PATENTSCHRIFT**

(45) Veröffentlichungstag und Bekanntmachung des Hinweises auf die Patenterteilung:
**23.09.2015 Patentblatt 2015/39**

(51) Int Cl.:
**G01S 17/08** *(2006.01)* **G01S 7/486** *(2006.01)*

(21) Anmeldenummer: **12008305.0**

(22) Anmeldetag: **12.12.2012**

(54) **TOF Entfernungssensor sowie Verfahren zum Betrieb**

TOF distance sensor and method for operating the same

Capteur de distance TOF et procédé de fonctionnement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.06.2014 Patentblatt 2014/25**

(73) Patentinhaber: **Espros Photonics AG**
**7320 Sargans (CH)**

(72) Erfinder:
• **HUBER, Dieter**
**CH-8708 Männedorf (CH)**
• **LEDERGERBER, Markus**
**CH-9470 Buchs (CH)**

(74) Vertreter: **Roth, Klaus et al**
**Otten, Roth, Dobler & Partner Patentanwälte**
**Grosstobeler Strasse 39**
**88276 Ravensburg / Berg (DE)**

(56) Entgegenhaltungen:
**EP-A1- 1 777 747    EP-A1- 2 402 783**
**JP-A- 2008 164 496**

**EP 2 743 724 B1**

**Beschreibung**

Die Erfindung betrifft einen TOF (Time of Flight) Entfernungssensor sowie ein Verfahren zum Betrieb eines TOF Entfernungssensors.

Aus dem Stand der Technik sind 2-Tap TOF Entfernungssensoren bekannt, deren Betrieb auf der Verwendung von Sinussignalen beruht.

JP2008164496 offenbart einen derartigen TOF Entfernungssensor.

Es ist Aufgabe der Erfindung, den Stand der Technik weiter zu bilden.

Diese Aufgabe wird durch einen TOF Entfernungssensor nach Anspruch 1, und das Verfahren nach Anspruch 8 gelöst. Vorteilhafte Ausgestaltungen sind in den weiteren Unteransprüchen angegeben.

Der erfmdungsgemässe TOF Entfernungssensor zur Messung einer Entfernung zu einem Objekt umfasst eine Elektronikeinrichtung zur Erzeugung eines Modulationssignals und zur Erzeugung von 4 Korrelationssignalen welche gegeneinander phasenverschoben sind und die gleiche Periodenlänge wie das Modulationssignal aufweisen. Er umfasst weiter eine Strahlungsquelle zum Aussenden von Strahlung, insbesondere von IR-Strahlung, die mit dem Modulationssignal moduliert ist. Er umfasst weiter eine Empfangseinrichtung die in vorbestimmtem räumlichen Bezug zur Strahlungsquelle steht zum Empfang von vom Objekt reflektierter Strahlung. Er umfasst weiter eine Korrelationseinrichtung zur Korrelation der empfangenen Strahlung oder einer der empfangenen Strahlung entsprechenden Grösse mit jeweils einem der 4 Korrelationssignale zur Bildung von 4 entsprechenden Korrelationswerten. Er umfasst weiter eine Differenzbildungseinrichtung zur Bildung von 2 Differenzkorrelationswerten aus der Differenz zwischen jeweils 2 der Korrelationswerte. Er und umfasst weiter eine Berechnungseinrichtung, die dazu ausgebildet ist, die Entfernung in vorbestimmter linearer Abhängigkeit von den 2 Differenzkorrelationswerten zu berechnen.

Vorzugsweise ist die Berechnungseinrichtung dazu ausgebildet, die Entfernung in vorbestimmter ausschliesslich linearer Abhängigkeit von den 2 Differenzkorrelationswerten zu berechnen.

Objekt kann insbesondere eine Person oder ein beweglicher oder fester Gegenstand oder eine Wand sein.

Die Strahlungsquelle ist vorzugsweise eine Halbleiter-Strahlungsquelle, vorzugsweise eine LED (Leuchtdiode) oder mehrere LEDs. Die ausgesendete Strahlung kann sichtbares oder unsichtbares Licht sein etwa IR (Infrarot), VIS (sichtbar) oder UV-Strahlung (Ultraviolett). Insbesondere kann die ausgesendete Strahlung im Wesentlichen monochromatisch sein, d.h. mit einer Halbwertsbreite von kleiner 10%, insbesondere kleiner 5%, insbesondere kleiner 2%, insbesondere kleiner 1%, insbesondere kleiner 0, 1 % der Wellenlänge.

Insbesondere kann die Signalform des Modulationssignal und/oder der Korrelationssignale mindestens teilweise konstante und/oder lineare Abschnitte aufweisen. Insbesondere kann die Signalform als Dreiecksform, als Sägezahnform mit einer weitgehend senkrechten Flanke, als Trapezform oder als Rechteckform ausgebildet sein. Insbesondere kann die Signalform des Modulationssignals von der Signalform der Korrelationssignale verschieden sein. Insbesondere kann das Modulationssignal ein Sinussignal sein. Insbesondere können die Korrelationssignale eine Signalform aufweisen, die periodisch über und unter einem Grenzwert wechselt. Insbesondere können die Korrelationssignale Rechtecksignale sein. Bei nicht rechteckigem Verlauf der Signalformen für Modulationssignal und/oder Korrelationssignale kann ein geringer Fehler in der Berechnung in Kauf genommen werden oder die Berechnungseinrichtung um eine Korrekturfunktion oder Korrekturtabelle ergänzt sein.

Insbesondere kann der Signalverlauf des Modulationssignals und/oder der Korrelationssignale periodisch ausgebildet sein.

Gleiche Periodenlänge kann insbesondere durch die gleiche zeitliche Abfolge von proportional gleichen Maxima und Minima zweier Signale in einem gleich langen Zeitabschnitt definiert sein.

Vorbestimmter räumlicher Bezug bedeutet insbesondere, dass Lichtquelle und Empfangssensor zum Zeitpunkt des Empfangs in bekannter Weise räumlich zueinander angeordnet sind und/oder nah beieinander sind im Verhältnis zur gemessenen Distanz und/oder an einem gemeinsamen Träger angeordnet sind und/oder in einem gemeinsamen Gehäuse angeordnet sind.

Korrelation ist die multiplikative Verknüpfung des zeitlichen Verlaufs zweier Signale insbesondere gleicher Periodendauer. Die Korrelation kann mathematisch abgebildet sein durch das Zeitintegral über das Produkt zweier Signalverläufe während einer Periodenlänge oder einer Anzahl von Periodenlängen.

Phasenverlauf bedeutet den zeitlichen Verlauf ausgedrückt in den Phasenwerten der ausgesandten Strahlung. Phasenverschoben bedeutet, dass die Signale zeitlich gegeneinander versetzt verlaufen. Die Begriffe phasenverschoben und phasenversetzt werden hier äquivalent verwendet. Signalform und Phasenverlauf können den gleichen Begriff bezeichnen, sofern es sich um einen Signalverlauf handelt, wobei der Phasenverlauf im Allgemeinen normiert betrachtet wird und eine Änderung der maximalen Amplitude über mehrere Perioden bei der Signalform im Allgemeinen vernachlässigt wird.

Insbesondere können einige oder alle Signale zur Berechnung auf 1 normiert werden oder sein. Dies kann vorteilhaft sein, da die detektierte Strahlungsintensität situationsabhängig verschieden sein kann.

Mit linearer Abhängigkeit kann auch eine abschnittsweise lineare Abhängigkeit gemeint sein, nicht jedoch ein abschnittsweiser genähert linearer Fit einer an sich nicht linearen Abhängigkeit.

Berechnung der Entfernung kann auch die Berechnung einer der Entfernung äquivalenten Grösse sein, wie beispielsweise die Berechnung der Phasenverschiebung der empfangenen Strahlung gegenüber der ausgesandten Strahlung oder der Zeitversatz zwischen ausgesandter und empfangener Strahlung.

Der Begriff Einrichtung zur Bezeichnung einer funktionalen Einheit muss nicht räumliche Einheit bedeuten, sondern meint insbesondere den funktionalen Zusammenhang.

Vorzugsweise sind das Modulationssignal und/oder die 4 Korrelationssignale als Rechtecksignale ausgebildet.

Ein Rechtecksignal ist im Wesentlichen rechteckig und variiert im Wesentlichen zwischen zwei Werten, vorzugsweise zwischen zwei positiven Werten, vorzugsweise zwischen Null und einem festen Wert. Vorzugsweise weist das Rechtecksignal einen Duty-Cycle (Verhältnis von Impulsdauer zu Periodendauer) von 50% auf.

Das Rechtecksignal kann den Vorteil bieten, dass es für verschiedene Arten von Lichtquellen, insbesondere für LEDs unabhängig von deren Strahlungscharakteristiken einsetzbar ist.

Vorzugsweise sind die Korrelationssignale jeweils um eine viertel Periode gegeneinander phasenverschoben und/oder ein Korrelationssignal ist phasengleich mit dem Modulationssignal.

Viertel Periode gegeneinander phasenverschoben bedeutet um Pi/2 phasenverschoben (90°). Insbesondere kann das erste Korrelationssignal gleich dem Modulationssignal und damit gleich dem zeitlichen Verlauf der ausgesendeten Strahlung sein während die 3 weiteren Korrelationssignale jeweils um eine viertel Periodenlänge versetzt sein können.

Vorzugsweise wird die Differenz jeweils aus Korrelationswerten gebildet, deren zugeordneten Korrelationssignale um eine halbe Periode phasenverschoben sind.

Halbe Periode gegeneinander phasenverschoben bedeutet um Pi phasenverschoben (180°).

Insbesondere wird eine erste Differenz aus den Korrelationswerten gebildet, deren zugeordnete Korrelationssignale um 0 und um Pi zum Modulationssignal phasenverschoben sind und eine zweite Differenz aus den Korrelationswerten, deren zugeordnete Korrelationssignale um Pi/2 und um 3Pi/2 zum Modulationssignal phasenverschoben sind.

Vorzugsweise ist die Berechnungseinrichtung dazu ausgebildet, die Berechnung zu einer von mindestens 2 unterschiedlichen linearen Abhängigkeiten in Abhängigkeit von den 2 Differenzkorrelationswerten zuzuordnen und die Entfernung in Abhängigkeit von der Zuordnung zu berechnen.

Vorzugsweise sind 4 unterschiedliche lineare Abhängigkeiten zur Zuordnung vorgesehen. Vorzugsweise sind die unterschiedlichen linearen Abhängigkeiten vorgespeichert.

Durch die Zuordnung kann eine Fallunterscheidung durchgeführt werden, insbesondere wenn die Funktion zur Berechnung der Entfernung nur abschnittsweise linear und/oder abschnittsweise konstant ist. Insbesondere wird die Zuordnung in Abhängigkeit der Vorzeichen der 2 Differenzkorrelationswerte durchgeführt. Insbesondere wird die Zuordnung in Abhängigkeit des qualitativen Vergleichs der Werte der 4 Korrelationswerte durchgeführt. Insbesondere wird die Zuordnung durchgeführt in Abhängigkeit vom Vergleich der Korrelationswerte die jeweils Korrelationssignalen zugeordnet sind, die um eine halbe Periode versetzt sind.

Das detektierte Strahlungssignal wird mit Signalen der gleichen Form, jedoch jeweils unterschiedlicher, vordefinierter Phase multipliziert und zeitlich integriert. Aus dem Vergleich der so gebildeten Korrelationsgrößen ergeben sich Differenzkorrelationswerte, die eine lineare Abhängigkeit als Maß für die Phasenverschiebung des detektierten Strahlungssignals und damit für die Entfernung zum Objekt ausbilden. Diese Differenzkorrelationsgrößen sind jedoch zunächst nicht eindeutig einer bestimmten Phasenverschiebung zugeordnet, sondern weisen in Abhängigkeit von der gesuchten Phasenverschiebung lineare Abschnitte auf. Die dafür benötigte zusätzliche Information ergibt sich aus den Vorzeichen der gebildeten Differenzkorrelationswerte. Die Linearität für die Abhängigkeit zur Entfernung resultiert dabei aus der Form des detektierten Strahlungssignals und der Modulationssignale, nämlich in Form sich periodisch wiederholender Rechteckpulse.

Vorzugsweise umfasst die Empfangseinrichtung ein Substrat mit photosensitivem Bereich zur Erzeugung von Signalträgern und/oder ein Driftgate zur Erzeugung eines Driftfeldes zum Transport der Signalträger. Vorzugsweise umfasst die Korrelationseinrichtung mindestens ein Modulationsgate zur Korrelation der empfangenen Strahlung mit wenigstens einem der Korrelationssignale, indem eine räumlichen Trennung der Signalträger in Abhängigkeit von einem der Korrelationssignale vorgenommen wird und/oder mindestens ein Storagegate zur zeitlichen Aufsummierung der entsprechend eines Korrelationssignals räumlich getrennten Signalträger zur Bildung einer der Korrelationswerte und/oder mindestens ein Speicherelement zur Aufnahme eines anderen Korrelationswerts, insbesondere ein weiteres Storagegate.

Signalträger können insbesondere Photoelektronen sein.

Insbesondere können die Empfangseinrichtung und/oder die Korrelationseinrichtung in CCD Technologie ausgeführt sein. Insbesondere kann die Berechnungseinrichtung in CMOS Technologie ausgeführt sein. Insbesondere kann die Empfangseinrichtung, die Korrelationseinrichtung, die Differenzbildungseinrichtung und die Berechnungseinrichtung jeweils teilweise oder ganz in kombinierter CMOS/CCD-Technologie ausgeführt sein. Gates können aus der CCD-Halbleitertechnologie bekannte Gates sein. Das Driftgate kann auch durch das oder die Modulationsgates gebildet sein. Das oder die Modulationsgates können auch durch das Driftgate gebildet sein, z.B. durch ein Gate aus Material mit elektrischem Widerstand. Das Driftgate wird in der Literatur gelegentlich als Photogate bezeichnet. Insbesondere kann ein Modulationsgate mit einem Korrelationssignal beaufschlagt sein, um als dem Korrelationssignal entsprechende veränderliche Schleuse für die Signalträger zu wirken, um so einen dem Korrelationswert entsprechenden Durchfluss der Signalträger zu erzeugen. Die aufsummierten Signalträger eines Stwelt.oragegate bildet den Wert für einen Korrelationswert. Insbesondere kann die gespeicherte Ladung einen Wert für den Korrelationswert bilden. Insbesondere kann ein Storagegate in bestimmten Zeitintervallen ausgelesen werden. Insbesondere kann ein Storagegate über ein Transfergate, eine Floating Diffusion und einen Source Follower ausgelesen werden.

Insbesondere kann das Speicherelement eine zum Storagegate verschiedenen Korrelationswert speichern, insbesondere einen Korrelationswert, dessen zugeordnetes Korrelationssignal zu dem Korrelationssignal des Storagegates um eine halbe Periode phasenverschoben ist. Dies kann den Vorteil haben, dass die erwähnte Differenzbildung zwischen diesen beiden Korrelationswerten auch für ein sogenanntes 1-Tap Lock-In TOF Pixel einfach möglich ist.

Die Bezeichnungen Signalträger oder Ladung eines Gates, Signalträger oder Ladung unter einem Gate oder dem Gate zugeordnete Signalträger oder Ladung sind hier äquivalent verwendet und meinen insbesondere die vom Potentialfeld des Gates im Halbleitersubstrat üblicherweise von einer Oxidschicht vom Gate getrennt gehaltene Signalträger oder Ladung. Entleerung des Gates meint Entfernen der Ladung unter dem Gate.

Die Aufsummierung der entsprechend eines Korrelationssignals räumlich getrennten Signalträger in einem Storagegate kann den Vorteil haben, dass das Signal-Rausch-Verhältnis verbessert wird.

Vorzugsweise umfasst die Empfangseinrichtung ein schwach dotiertes Halbleitersubstrat als photosensitiven Bereich zur Erzeugung von Signalträgern. Vorzugsweise umfasst die Korrelationseinrichtung zwei Modulationsgates zur räumlichen Trennung der Signalträger in zeitlicher Korrelation mit jeweils einem unterschiedlichen Korrelationssignal und/oder zwei den Modulationsgates zugeordnete Storagegates zur Aufsummierung der entsprechend getrennten Signalträger. Vorzugsweise umfasst die Differenzbildungseinrichtung zwei den Storagegates zugeordnete Transfergates und/oder Floating Diffusions und/oder Source Follower zur getrennten Auslese und Umwandlung der unter den Storagegates getrennten und aufsummierten Signalträger in zwei den jeweils aufsummierten Signalträgern zugeordneten Spannungswerten. Vorzugsweise umfasst die Differenzbildungseinrichtung eine Rampeneinrichtung, welche die Signalträger unter einem ersten der zwei Storagegates vor der Auslese und Umwandlung, insbesondere mittels einer Zeitrampe, insbesondere durch parallele schrittweise oder kontinuierliche Veränderung der Potentiale der beiden Storagegates, insbesondere über das entsprechende Transfergate in das entsprechende erste der zwei Floating Diffusion solange abfliessen lässt, bis das Potential der zweiten Floating Diffusion sich zu ändern beginnt. Vorzugsweise umfasst die Differenzbildungseinrichtung einen AD-Wandler (Analog-Digital-Wandler) zur Bildung eines digitalen Werts für einen Differenzkorrelationswert aus dem Potential und/oder dem Spannungswert der ersten Floating Diffusion.

Insbesondere kann die genannte kontinuierliche Veränderung der Potentiale im Falle von Photoelektronen als Signalträger durch eine Erniedrigung des Potentials gegeben sein.

Vorzugsweise ist die Differenzbildungseinrichtung dazu ausgebildet, die Differenzkorrelationswerte in der Ladungsdomäne zu bilden, insbesondere durch Vergleich der unter den Storagegates angesammelten Signalträger, insbesondere durch das Betreiben der Rampeneinrichtung, sodass die Menge der Ladung derjenigen Floating Diffusion, die dem stärker geladenen Storagegate zugeordnet ist, einem Differenzkorrelationswert entspricht.

Insbesondere sind die Gates an der Frontseite des Substrats angeordnet. Insbesondere können die Gates an der Frontseite durch eine Blende abgedeckt sein, welche das Driftgate und/oder ganz oder teilweise die Modulationsgates frei lässt. Dies kann zu einer definierten Signalträgergeneration im Bereich unter dem Driftgate und/oder den Modulationsgates führen.

Insbesondere kann der TOF Entfernungssensor zur Aufnahme der Strahlung durch die Frontseite oder durch die Rückseite vorgesehen sein. Insbesondere kann der Empfangssensor einen Rückseitenkontakt zur Verarmung des Halbleitersubstrats umfassen. Insbesondere können dazu Gates oder der Rückseitenkontakt ganz oder teilweise transparent für die Strahlung sein.

Insbesondere können so die Korrelationswerte und/oder die Differenzkorrelationswerte auf Ebene der Signalträger und/oder der Ladungsträger und/oder der Photoelektronen, insbesondere analog gebildet werden. Insbesondere kann die Differenzbildung mindestens teilweise analog erfolgten, insbesondere mindestens teilweise auf der Ebene der Signalträger erfolgten, insbesondere mindestens teilweise auf der Ebene der Photoelektronen erfolgten. Insbesondere können die Korrelationswerte und/oder Differenzkorrelationswerte auf Ebene der Signalträger und/oder Ladungsträger vorliegen, insbesondere als Menge an Ladung vorliegen, insbesondere als Ladung unter den Storagegates vorliegen.

Der zuletzt mit 2 Modulationsgates und 2 Transfergates angegebene TOF Entfernungsmesser wird in der Literatur gelegentlich auch als 2-Tap Lock-In Pixel bezeichnet.

Denkbar ist auch ein 4-Tap Lock-In Pixel welches 4 Modulationsgates und/oder 4 Transfergates umfasst. Die Rampeneinrichtung wäre für ein 4-Tap Look-In Pixel dann jeweils für 2 Strukturen aus Modulationsgate und Transfergate einzusetzen, also entweder sequenziell oder mit 2 parallelen Rampeneinrichtungen.

Vorzugsweise umfasst der TOF Entfernungssensor mehrere Empfangssensoren die eine Pixelmatrix ausbilden zur Erzeugung eines 3D-Bildes.

Das erfindungsgemässe Verfahren zum Betrieb eines Entfernungssensors umfasst die Verfahrensschritte (I) Aussenden von Strahlung aus einer Lichtquelle wobei die Strahlung mit einem Modulationssignal moduliert ist; (II) Empfangen der ausgesandten Strahlung die von einem Objekt reflektiert wurde mit einem Empfangssensor der mit der Lichtquelle in einem vorbestimmten räumlichen Bezug steht; (III) Bildung von 4 Korrelationssignalen die gegeneinander phasenverschoben sind und die gleiche Periodenlänge wie das Modulationssignal aufweisen; (IV) Korrelation der empfangenen Strahlung oder einer äquivalenten Grösse mit den 4 Korrelationssignalen zur Bildung von 4 Korrelationswerten; (V) Differenzbildung zwischen jeweils 2 Korrelationswerten zur Bildung von 2 Differenzkorrelationswerten; (VI) Berechnung der Entfernung zum Objekt in linearer Abhängigkeit von den beiden Differenzkorrelationswerten.

Insbesondere können die Verfahrensschritte im Wesentlichen kontinuierlich ausgeführt werden. Insbesondere können die Verfahrensschritte zyklisch ausgeführt werden. Insbesondere kann die Lichtquelle eine bestimmte Messdauer lang Strahlung aussenden und dann eine weitere bestimmte Berechnungsdauer lang pausieren währenddessen die Berechnungen durchgeführt werden, um danach den Zyklus wieder von vorn zu beginnen. Insbesondere kann die Messdauer 1000 Perioden des Modulationssignals lang dauern. Insbesondere kann die Periodendauer des Messignals 20 MHz betragen.

Insbesondere kann die Zyklusdauer 20 ms betragen. Insbesondere können einige Verfahrensschritte eines Zyklus teilweise oder ganz parallel ausgeführt werden, etwa Aussenden und Empfang. Insbesondere können einige Verfahrensschritte zweier aufeinanderfolgender Zyklen teilweise oder ganz parallel ausgeführt werden, beispielsweise Differenzbildung und/oder Berechnung des vorhergehenden Zyklus zusammen mit Aussenden und/oder Empfang und/oder Bildung eines Korrelationswerts und/oder Korrelation des darauffolgenden Zyklus.

Vorzugsweise sind das Modulationssignal und/oder die 4 Korrelationssignale als Rechtecksignale ausgebildet.

Vorzugsweise sind die Korrelationssignale jeweils um eine viertel Periode gegeneinander phasenverschoben und/oder ein Korrelationssignal ist vorzugsweise phasengleich mit dem Modulationssignal.

Vorzugsweise wird die Differenz jeweils aus Korrelationswerten gebildet, deren zugeordneten Korrelationssignale um eine halbe Periode phasenverschoben sind.

Insbesondere können bei einem 2-Tap Lock-In Pixel 2 Zyklen, insbesondere 2 zeitversetzte Zyklen durchgeführt werde. Dabei verwendet der erste Zyklus entsprechend den 2 Gatestrukturen zwei erste um eine halbe Periode phasenverschobene Korrelationssignale, um den ersten Differenzkorrelationswert zu bilden. Der zweite Zyklus verwendet zwei um eine halbe Periode phasenversetzte Korrelationssignale, die zu den Korrelationssignalen des ersten Zyklus um eine viertel Periode versetzt sind, um den zweiten Differenzkorrelationswert zu bilden. Damit liegen beide Differenzkorrelationswerte vor und es kann die Entfernung berechnet werden. Der Zyklussatz aus dem ersten und zweiten Zyklus kann nun für eine erneute Messung erneut erfolgen. Damit ist eine zeitaufgelöste Entfernungsmessung möglich. Die Zyklen werden in der Figurenbeschreibung als Messphasen bezeichnet.

Vorzugsweise führt das erfinderische Verfahren vor der Berechnung (VI) eine Fallunterscheidung in Abhängigkeit von den 2 Differenzkorrelationswerten zur Zuordnung der Berechnung zu einer von 4 unterschiedlichen linearen Abhängigkeiten durch.

Vorzugsweise erfolgt die Differenzbildung mindestens teilweise analog, insbesondere mindestens teilweise auf der Ebene der Signalträger, insbesondere mindestens teilweise auf der Ebene der Photoelektronen, insbesondere in der Ladungsdomäne insbesondere durch die Korrelation der empfangenen Strahlung mit den 4 Korrelationssignalen durch räumliche Trennung der durch die Strahlung erzeugten Signalträger zur Bildung von 2 den Korrelationswerten entsprechenden Ladungsmengen in der Ladungsdomäne und durch Abschöpfen von Ladung von einer der 2 Ladungsmengen bis die 2 Ladungsmengen gleich sind, sodass die abgeschöpfte Ladungsmenge dem Differenzkorrelationswert entspricht.

Der Vorteil kann ein verbessertes Signal-Rausch-Verhältnis und/oder ein vergrösserter Dynamikbereich sein.

Zur Darstellung der 4 linearen Funktionen erhalten die genannten Grössen die folgenden Bezeichnungen:

Korrelationswerte A0, A1, A2 und A3 mit Bezug zum das sie bildendenden Korrelationssignal:

A0: aus gegenüber Modulationssignal nicht versetztem Korrelationssignals
A1: aus um 1/4 Periode gegenüber Modulationssignal versetztem Korrelationssignal
A2: aus um 1/2 Periode gegenüber Modulationssignal versetztem Korrelationssignal
A3: aus um 3/4 Periode gegenüber Modulationssignal versetztem Korrelationssignal

Differenzkorrelationswerte C0 und C1 mit den zugeordneten Korrelationswerten:

$$C0 := A0 - A2$$

$$C1 := A1 - A3$$

Anstelle der Entfernung werden die Funktionen zur Berechnung der Phasenverzögerung dPhi der empfangenen Strahlung in Bezug zur ausgesandten Strahlung angegeben. Die Umrechnung in die exakte Entfernung ergibt sich aus der Modulationsfrequenz des Modulationssignals der ausgesandten Strahlung. In Abhängigkeit von den 2 Differenzkorrelationswerten ergeben sich die 4 linearen Funktionen beispielsweise zu:

$$\text{Für } C0 > 0 \text{ und } C1 > 0 \quad \text{ergibt sich} \quad dPhi = (\,Pi\,/\,4\,) * (\,(\,(C1{-}C0)\,/\,(C0{+}C1)\,) + 1\,).$$

$$\text{Für } C0 > 0 \text{ und } C1 < 0 \quad \text{ergibt sich} \quad dPhi = (\,Pi\,/\,4\,) * (\,(\,(C1{+}C0)\,/\,(C0{-}C1)\,) + 7\,).$$

$$\text{Für } C0 < 0 \text{ und } C1 > 0 \quad \text{ergibt sich} \quad dPhi = (\,Pi\,/\,4\,) * (\,(\,(C1{+}C0)\,/\,(C1{-}C0)\,) + 3\,).$$

$$\text{Für } C0 < 0 \text{ und } C1 < 0 \quad \text{ergibt sich} \quad dPhi = (\,Pi\,/\,4\,) * (\,(\,(C1{-}C0)\,/\,(C0{+}C1)\,) + 5\,).$$

Die Distanz D zwischen Objekt und TOF Entfernungssensor ergibt sich aus der halben Distanz des zurückgelegten Lichtwegs von der Strahlungsquelle über das Objekt bis zum Halbleitersubstrat. Mit der Kreiszahl Pi, der Lichtgeschwindigkeit c und der Modulationsfrequenz f ergibt sich die Distanz aus der Phasenverzögerung dPhi zu:

$$D = (\,c\,/\,(\,4 * Pi * f\,)\,) * dPhi$$

Die Vorteile der Erfindung können eine Reduktion des Hardwareaufwandes, eine Verbesserung des Signal-Rausch-Verhältnisses, eine Vergrösserung des Dynamikbereichs, eine Erhöhung der Verarbeitungsgeschwindigkeit, eine Erhöhung der Framerate, eine Verringerung des Berechnungsaufwandes, eine Verkleinerung der Sensorgrösse, und/oder eine höhere Integration auf Chipebene sein.

Weitere Merkmale der Erfindung sind in den Zeichnungen angegeben.

Die Erfindung wird im Folgenden an einem Ausführungsbeispiel mit Zeichnungen näher erläutert. Gleiche Bezugszeichen in den einzelnen Figuren bezeichnen dabei gleiche Elemente. Es zeigt

Fig. 1     den TOF Entfernungssensor mit Objekt,
Fig. 2     die Empfangseinrichtung mit Korrelationseinrichtung und Teilen der Differenzbildungseinrichtung,
Fig. 3     ein Ablaufdiagramm des Verfahrens zum Betrieb eines TOF Entfernungssensors,
Fig. 4     die Intensitätsverläufe der ausgesandten und empfangenen Strahlung,
Fig. 5     die Signalverläufe der Korrelationssignale,
Fig. 6     die Werteverläufe der linken Seite des Empfangssensors während einer ersten beispielhaften Messphase,
Fig. 7     die Werteverläufe der rechten Seite des Empfangssensors während einer ersten beispielhaften Messphase,
Fig. 8     den Ladungsdifferenzverlauf der ersten Messphase,
Fig. 9     den normierten Ladungsdifferenzverlauf der ersten Messphase,
Fig. 10    die Werteverläufe der linken Seite des Empfangssensors während einer zweiten beispielhaften Messphase,
Fig. 11    die Werteverläufe der linken Seite des Empfangssensors während einer zweiten beispielhaften Messphase,
Fig. 12    den Ladungsdifferenzverlauf der zweiten Messphase,
Fig. 13    den normierten Ladungsdifferenzverlauf der zweiten Messphase,
Fig. 14    den Verlauf der summierten Normierungsfunktion, und
Fig. 15    die linearen Funktionen der Berechnungseinrichtung.

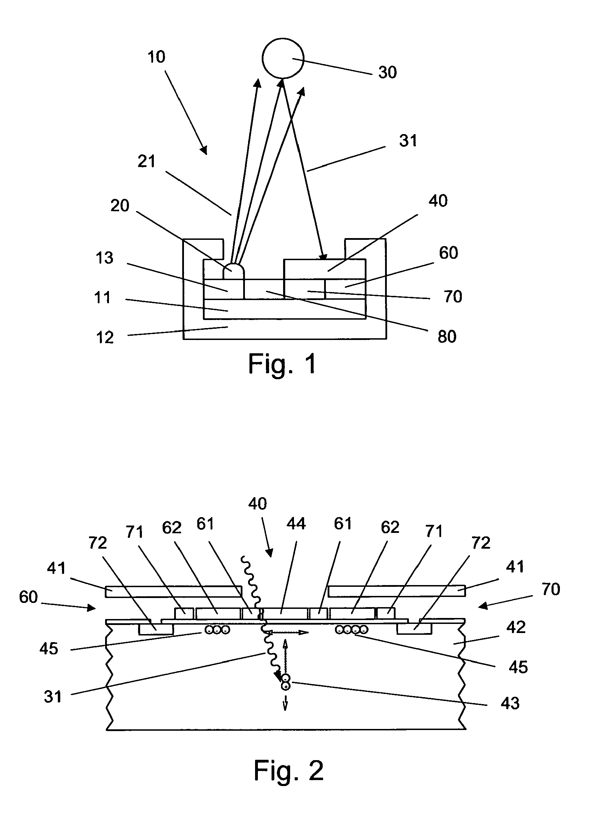

Fig. 1 zeigt den TOF Entfernungssensor 10 mit Objekt 30. Das Objekt ist vom TOF Entfernungssensor beabstandet. Die Strahlungsquelle 20 ist beispielsweise eine LED oder eine Anordnung von mehreren LEDs. Die Strahlungsquelle wird von der Elektronikeinrichtung 13 angesteuert, welche die Strahlungsquelle mit einem Rechtecksignal als Modulationssignal moduliert betreibt. Die Strahlungsquelle sendet beispielsweise monochromatisches IR Licht 21 aus, welches am Objekt 30 diffus reflektiert wird und als reflektierte Strahlung 31 auf die Empfangseinrichtung 40 trifft. Die empfangene Strahlung erzeugt in der Empfangseinrichtung einen Werteverlauf der induzierten Photoelektronen und damit einen Signalverlauf für die empfangene Strahlung. Die Korrelationseinrichtung 60 ist mit der Empfangseinrichtung 40 verbunden und übernimmt den zeitlichen Werteverlauf der empfangenen Strahlungsintensität. Die Elektronikeinrichtung bildet für 2 Messphasen jeweils 2 Korrelationssignale, welche jeweils von der Korrelationseinrichtung übernommen werden. Die Korrelationseinrichtung korreliert jeweils die Korrelationssignale mit dem Signalverlauf der Empfangseinrichtung und erzeugt jeweils 2 Korrelationswerte. Die Differenzbildungseinrichtung 70 ist mit der Korrelationseinrichtung verbunden und übernimmt die jeweils 2 Korrelationswerte und bildet jeweils 2 Differenzkorrelationswerte jeweils aus der Differenz der 2 Korrelationswerte. Die Berechnungseinrichtung 80 ist mit der Korrelationseinrichtung verbunden und übernimmt die beiden Differenzkorrelationswerte aus den beiden Messphasen und berechnet die Entfernung des Objekts vom TOF Entfernungssensor. Die Elektronikeinrichtung 13, die Empfangseinrichtung 40, die Korrelationseinrichtung 60, die Differenzbildungseinrichtung 70 und die Berechnungseinrichtung 80 sind auf einem Chip integriert und in einem kombinierten CMOS/CCD Verfahren ausgeführt. Der Chip und die Strahlungsquelle 20 sind an einem Träger 11 angeordnet und von einem Gehäuse 12 umgeben. Die Strahlungsquelle und die Empfangseinrichtung weisen jeweils eine in der Figur nicht dargestellte Optikeinrichtung auf, die in Richtung des Raumes fokussiert, in dem die Entfernung von Objekten bestimmt werden soll.

Die ausgesandte Strahlung 21 weist eine Wellenlänge von 860 nm auf und ist mit einem Rechtecksignal von 20 MHz gepulst. Die von der Empfangseinrichtung 40 empfangene reflektierte Strahlung bleibt mit einem Rechtecksignal von 20 MHz gepulst und ist gegenüber dem Modulationssignal der von der Strahlungsquelle 20 ausgesendeten Strahlung um die Zeit des Lichtweges phasenverschoben. Die Phasenverschiebung zwischen ausgesendetem und empfangenem Rechtecksignal entspricht der doppelten Entfernung zwischen TOF Entfernungsensor und Objekt.

Fig. 2 zeigt die Empfangseinrichtung 40 mit Korrelationseinrichtung 60 und Teilen der Differenzbildungseinrichtung 70 in einem Halbleiterchip integriert. Die Empfangseinrichtung 40 weist ein niedrig n-dotiertes Float Zone Silizium Halbleitersubstrat 42 auf mit einem spezifischen elektrischen Flächenwiderstand von grösser oder gleich 2000 Ohm cm. An der Oberfläche des Halbleitersubstrats ist ein Driftgate 44 und beidseitig in symmetrischer Anordnung und jeweils voneinander mit Abstand jeweils ein Modulationsgate 61, ein Storagegate 62, ein Transfergate 71 und eine Floating Diffusion 72 angeordnet. Die dazu sinnvollen Layer und Kontakte sind nicht dargestellt. Eine Blende 41 ist über den Gates angeordnet, wobei die Blende eine Blendenöffnung im Bereich des Driftgates aufweist und die Storagegates, Transfergates und die Floating Diffusion samt dem unter den jeweiligen Gates liegenden Halbleitersubstrat gegenüber der einfallenden reflektierten Strahlung 23 abschattet. Das Halbleitersubstrat ist mindestens unter dem Driftgate verarmt. Das Driftgate 44 ist mit positivem Potential beaufschlagt und bildet im Halbleitersubstrat eine Raumladungszone aus.

Die über die Blendenöffnung in das Halbleitersubstrat unter dem Driftgate eindringende reflektierte IR Strahlung 31 induziert im Halbleitersubstrat 42 Elektronen-Lochpaare 43.

Die Photoelektronen werden durch die vom Driftgate 44 ausgebildete Raumladungszone zum Driftgate hin angezogen. Das Driftgate weist ein Potential von etwa 4 V auf. Die Anzahl der angezogenen Photoelektronen ist proportional der empfangenen Strahlungsintensität.

Die Modulationsgates 61 können mit einem modulierten Potential beaufschlagt sein dessen Maximum zwischen den Potentialen des Driftgates und des Storagegate und dessen Minimum unter dem des Driftgates liegt. Das Potential des Modulationsgates moduliert etwa zwischen den Werten 0 V und 5 V. Die beiden Modulationsgates sind zueinander mit inversen Potentialen betrieben. Das heisst, dass das Potential des einen Modulationsgates 0 V ist, wenn das des anderen positiv ist und umgekehrt. Dann ist stets das eine Modulationsgate mit 0 V und das andere Modulationsgate mit 5 V Potential versehen. Ein Potentialminimum, hier also 0 V, führt zu einer Potentialbarriere für die Photoelektronen unter dem Driftgate, sodass keine Photoelektronen zum Modulationsgate zugeordneten Storagegate gelangen können. Ein Potentialmaximum, hier also 5 V, führt zu einem Abfluss der Photoelektronen unter dem Driftgate am Modulationsgate vorbei in das zugeordnete Storagegate.

Durch die Beaufschlagung der beiden Modulationsgates mit jeweils einem Potential das jeweils zueinander inversen Rechtecksignalen entspricht, wird der Fluss der durch die empfangene Strahlungsintensität erzeugten Photoelektronen entsprechend einer Weiche gelenkt. Der so entstehende Fluss dieser Photoelektronen unter den Modulationsgates entspricht einer Multiplikation, das heisst einer Korrelation der entsprechenden Rechtecksignale mit dem empfangenen Strahlungssignal. Die Rechtecksignale haben hier die Eigenschaft eines korrelierenden Signals und sind hier als Korrelationssignal bezeichnet.

Durch hier gezeigte Konstruktion der Korrelationseinrichtung können auch Sinussignale, die anstelle der Rechtecksignale als Korrelationssignale verwendet werden, wie eine digitale Weiche für die Photoelektronen wirken. Daher wirken hier auch sinusförmige Korrelationssignale wie Rechtecksignale. Es können hier also auch sinusförmige Korrelationssignale verwendet werden und für die Zwecke der Berechnung wie Rechtecksingale angesehen werden ohne dass sich die Richtigkeit der unten hergeleiteten linearen Abhängigkeit ändert. Dies gilt für alle periodisch zwischen 2 Werten wechselnden Signalformen als Korrelationssignale. Insbesondere können die Korrelationssignale eine Signalform aufweisen, die periodisch über und unter einen Grenzwert wechselt, sodass das entsprechende Potential der Modulationsgates die Photoelektronen entsprechend der erwähnten Weiche periodisch wechselnd unter die Storagegates leitet.

Die Storagegates 62 sind mit einem höheren Potential als das Driftgate 44 beaufschlagt und sammeln die Photoelektronen 43, 45 entsprechend dem Status der Modulationsgates wechselseitig unter sich. Die Storagegates haben etwa das Potential 10 V. Die unter den Storagegates 62 durch die Photoelektronen 45 angesammelten Ladungen entsprechen den Korrelationswerten. Die Korrelationswerte liegen somit in der Ladungsdomäne vor. Die Ansammlung der Photoelektronen unter den entsprechenden Storagegates entspricht einer zeitlichen Integration der oben erwähnten Korrelation von Korrelationssignal und empfangenen Strahlungssignal.

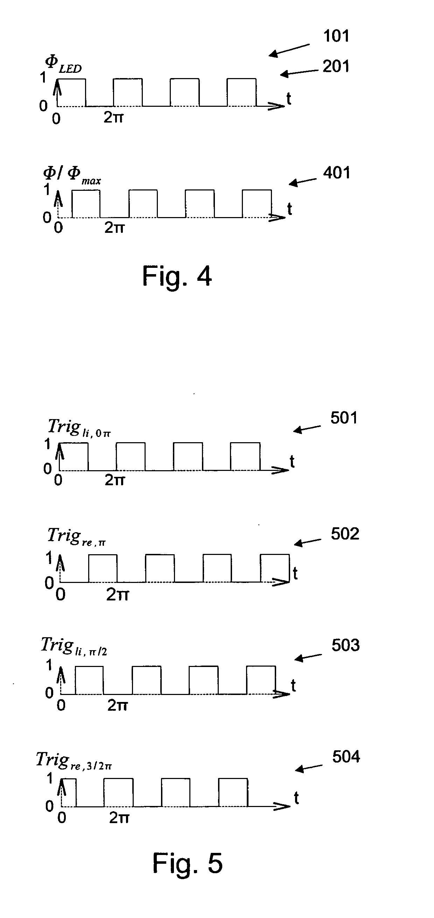

Die so messbar vorliegenden Korrelationswerte werden für die spätere Besprechung anhand bestimmter Korrelationssignale entsprechend Fig. 5 wie folgt definiert:

A0: aus gegenüber Modulationssignal nicht versetztem Korrelationssignals 501
A1: aus um 1/4 Periode gegenüber Modulationssignal versetztem Korrelationssignal 502
A2: aus um 1/2 Periode gegenüber Modulationssignal versetztem Korrelationssignal 503
A3: aus um 3/4 Periode gegenüber Modulationssignal versetztem Korrelationssignal 504

Zur Detektion der unter den Storagegates angesammelten Photoelektronen wird zum einen das Potential der Modulationsgates auf 0 V gelegt, um eine Potentialbarriere für die Photoelektronen in Richtung Driftgate zu bilden. Zum anderen wird das Potential der Transfergates auf einen mittleren Wert angehoben, beispielsweise 6 V, um einen bedingten Abfluss der Photoelektronen in Richtung Floating Diffusions zu ermöglichen.

Nun wird das positive Potential beider Storagegates von etwa 10 V mittels einer Zeitrampe parallel abgesenkt. Das sich dabei verändernde addierte Potential aus dem sinkenden an die Storagegates angelegten positiven Potential und dem negativen Potential der darunter befindlichen Ladung bestimmt, ob Ladung über die Transfergates abfliessen kann. Der Absenkprozess teilt sich dabei in drei Phasen ein. In einer ersten Phase der Zeitrampe ist das genannte addierte Potential noch für beide Storagegates positiver als das konstant und gleich positive Potential der Transfergates und es fliest keine Ladung ab. In einer anschliessenden zweiten Phase der Zeitrampe ist das genannte addierte Potential für ein Storagegate positiver und für das andere Storagegate negativer als das konstant und gleich positive Potential der Transfergates. Dadurch fliesst Ladung unter dem Storagegate mit dem positiveren addierten Potential über das zugeordnete Transfergate in die zugeordnete Floating Diffusion ab, sodass das addierte Potential wieder gleich dem Potential des entsprechenden Transfergates ist. In einer abschliessenden dritten Phase der Zeitrampe sind die genannten addierten Potentiale beider Storagegates höher als die konstant gleichen Potentiale. Dadurch fliessen unter beiden Storagegates Ladungen über das jeweils zugeordnete Transfergate in die jeweils zugeordnete Floating Diffusion ab. Unmittelbar mit Beginn der dritten Phase wird die Zeitrampe gestoppt, d.h. das Potential der Storagegates wird nicht weiter abgesenkt, sodass im Wesentlichen nur der Ladungsabfluss aus der zweiten Phase relevant ist. Die nun im einen geladenen Floating Diffusion vorliegende Ladungsmenge entspricht somit der Differenz der Ladungsmenge aus den beiden Storagegates. Die Zeitrampe führt also eine Subtraktion der Ladungsmengen unter den beiden Storagegates durch. Die vor der Ausführung der Zeitrampe unter den beiden Storagegates angesammelte Ladungsmenge entspricht, wie oben ausgeführt, den entsprechenden Korrelationswerten. Somit entspricht nach Durchführung der oben beschriebenen Zeitrampe die Ladungsmenge der einen geladenen Floating Diffusion dem entsprechenden Differenzkorrelationswert.

Die Ladungsmenge der einen geladenen Floating Diffusion wird nun mittels Source Follower in eine entsprechende Spannung gewandelt und anschliessend mittels AD-Wandler (Analog-Digital-Wandler) in einen entsprechenden digitalen Wert gewandelt. Dieser digitale Differenzkorrelationswert wird der Berechnungseinrichtung zur weiteren Berechnung übergeben.

Die Differenzkorrelationswerte werden für die folgenden Ausführungen anhand der sie bildenden Korrelationswerte wie folgt definiert:

$$C0 := A0 - A2$$

$$C1 := A1 - A3$$

Die Berechnungseinrichtung ist eine digitale Schaltung, die auf dem gleichen Halbleiterchip implementiert ist wie die Empfangseinrichtung, die Korrelationseinrichtung und die Differenzbildungseinrichtung. Insbesondere sind die Empfangseinrichtung, die Elektronikeinrichtung, die Korrelationseinrichtung, die Differenzbildungseinrichtung und die Berechnungseinrichtung in CMOS/CCD Technologie auf einem einzigen Halbleiterchip insbesondere als System on Chip angeordnet.

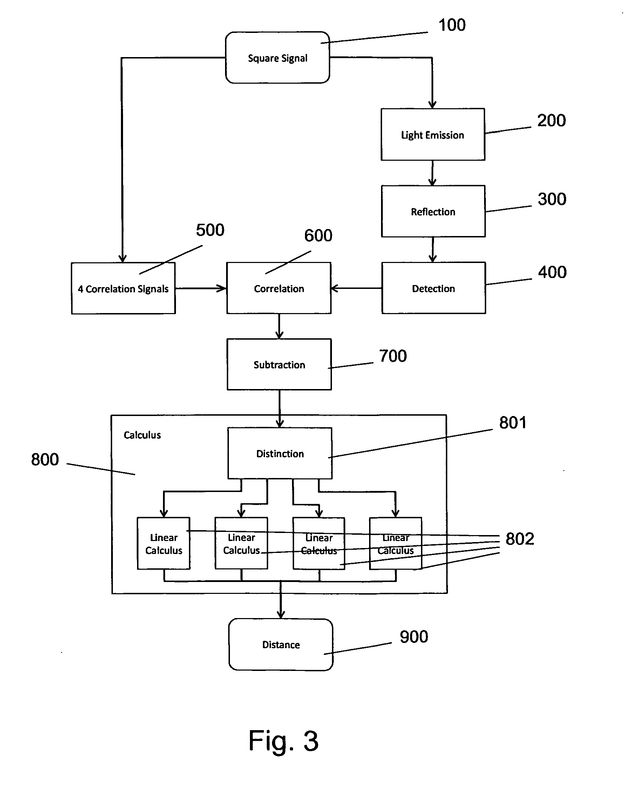

Fig. 3 zeigt ein Ablaufdiagramm des erfinderischen Verfahrens zum Betrieb des TOF Entfernungssensors nach Figur 1 und 2.

Die Elektronikeinrichtung 13 erzeugt ein Rechtecksignal als Modulationssignal 100. Das Modulationssignal könnte dem TOF Entfernungsensor auch extern zugeführt werden. Das Modulationssignal wird synchron sowohl an die Strahlungsquelle 20 zum Modulieren der Lichtemission 200 als auch an die Korrelationseinrichtung 60 zur Bildung 500 von 4 Korrelationssignalen übergeben. Das modulierte Licht erfährt am Objekt 30 eine Reflektion 300 in Richtung der Empfangseinrichtung von der das reflektierte Licht empfangen 400 wird. Sowohl die Signalinformation des empfangenen Lichtes als auch die 4 Korrelationssignale werden der Korrelationseinrichtung 60 zur Korrelation 600 übergeben. Die Korrelationseinrichtung 60 korreliert die Signalinformation des empfangenen Lichts mit den Korrelationssignalen und erzeugt daraus 4 Korrelationswerte. Die 4 Korrelationswerte werden von der Korrelationseinrichtung 60 an die Differenzbildungseinrichtung 70 zur Differenzbildung 700 übergeben. Die Differenzbildungseinrichtung bildet die Differenz aus jeweils 2 Korrelationswerten zu 2 Differenzkorrelationswerten und übergibt diese 2 Differenzkorrelationswerte an die Berechnungseinrichtung 80 zur Berechnung 800. Zur Berechnung 800 bildet Berechnungseinrichtung 80 zunächst eine Fallunterscheidung 801 aufgrund der 2 Differenzkorrelationswerte und weist die 2 Differenzkorrelationswerte entsprechend einer von 4 linearen Funktionen zur Berechnung mit einer konstanten linearen Funktion 802 zu. Die Berechnung 802 aus den 2 Differenzkorrelationswerten mit der zugeordneten konstanten linearen Funktion ergibt im Ergebnis einen Wert für die Distanz 900 der vom Verfahren ausgegeben wird.

Fig. 4 bis Fig. 15 zeigen im Folgenden das Verfahren anhand von Werteverläufen im Detail.

Die Elektronikeinrichtung 13 bildet ein Rechtecksignal 100 als Modulationssignal 101 mit den Werten 0 und 1, mit einer Frequenz von 20 MHz und mit Duty Cycle 50 % (Fig. 4).

Das Modulationssignal 101 moduliert das durch die Strahlungsquelle 20 ausgesendete Licht 201 pulsartig in gleicher Phase wie das Modulationssignal 141. Die ausgesendete Strahlung 21 erfährt am Objekt 30 eine Reflexion 300 in Richtung der Empfangseinrichtung 40 welche zum Lichtempfang 400 des reflektierten Lichtes ausgebildet ist.

Das empfangene Licht weist entsprechend der zurückgelegten Entfernung eine Phasenverschiebung zum ausgesendeten Licht aus. Im Folgenden wird als Beispiel für das empfangene Licht 401 eine Phasenverschiebung von 1/2 Pi angenommen (Fig. 4).

Die Verfahrensschritte 200 bis 700, also die Verfahrensschritte nach der Erzeugung des Rechtecksignals 100 bzw. des Modulationssignals 101 bis vor der Berechnung 800, werden in zwei getrennten Messphasen durchgeführt, die jeweils eine der beiden Differenzkorrelationswerte ergeben.

In der ersten Messphase erzeugt die Elektronikeinrichtung 13 als Teil der Korrelationseinrichtung 60 die beiden Korrelationssignale 501 und 502 aus dem Modulationssignal 101. Das erste Korrelationssignal 501 ist phasengleich zum Modulationssignal 101 während das zweite Korrelationssignal 502 zum Modulationssignal um Pi phasenverschoben ist (Fig. 5). Die beiden Korrelationssignale sind somit zueinander invers.

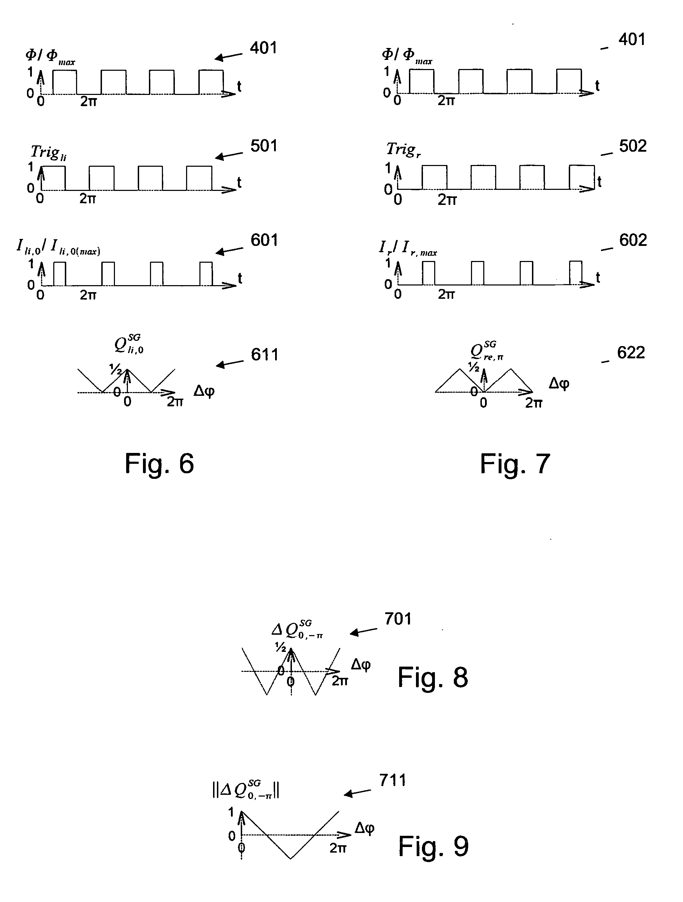

Das linke und das rechte Modulationsgate als weitere Teile der Korrelationseinrichtung werden nun entsprechend dem ersten und dem zweiten Korrelationssignal eine bestimmte Messzeit lang moduliert. Fig. 6 zeigt den Phasenverlauf 501 des Potentials des linken Modulationsgates und den Phasenverlauf 601 der vom linken Modulationsgate an das zugeordnete Storagegate übergebenen Ladung. Fig. 7 zeigt den Phasenverlauf 501 des Potentials des rechten Modulationsgates und den Phasenverlauf 602 der vom rechten Modulationsgate an das zugeordnete Storagegate übergebenen Ladung. Entsprechend den Ausführungen zu Figur 2 häufen sich Ladungen unter den zugeordneten Storagegates an.

Die Ladungsmengen unter den Storagegates werden nach Ablauf der Messzeit mittels der Zeitrampe subtrahiert und ergeben entsprechend den Ausführungen zu Fig. 2 den ersten Differenzkorrelationskoeffizient welcher der Berechnungseinrichtung 80 zur Berechnung 800 zugeführt wird. Die Berechnungseinrichtung speichert den ersten Differenzkorrelationskoeffizienten in einem Zwischenspeicher.

In der zweiten Messphase erzeugt die Elektronikeinrichtung als Teil der Korrelationseinrichtung 60 die beiden anderen Korrelationssignale 503 und 504 aus dem Modulationssignal 101. Das dritte Korrelationssignal 503 ist zum Modulationssignal 101 um Pi/2 phasenverschoben während das vierte Korrelationssignal 504 zum Modulationssignal 101 um 3/2 Pi phasenverschoben ist. Die beiden Korrelationssignale sind also zueinander invers. Der weitere Ablauf der zweiten Messphase entspricht dem der ersten Messphase.

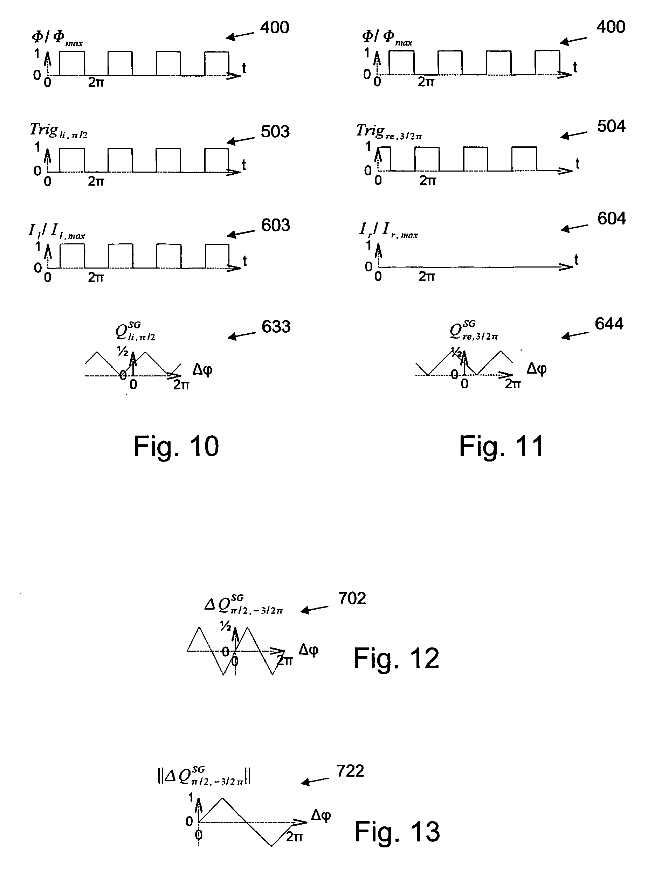

Fig. 10 zeigt den Phasenverlauf 503 des Potentials des linken Modulationsgates und den Phasenverlauf 603 der vom linken Modulationsgate an das zugeordnete Storagegate übergebenen Ladung. Fig. 11 zeigt den Phasenverlauf 504 des Potentials des rechten Modulationsgates und den Phasenverlauf 604 der vom rechten Modulationsgate an das zugeordnete Storagegate übergebenen Ladung.

Somit ergibt sich der zweite Differenzkorrelationswert analog welcher ebenfalls der Berechnungseinrichtung 80 zur Berechnung zugeführt wird. Die Berechnungseinrichtung verfügt nach der zweiten Messphase somit über den ersten und den zweiten Differenzkorrelationswert.

Damit sind die beiden Messphasen abgeschlossen und die Berechnung 800 kann erfolgen.

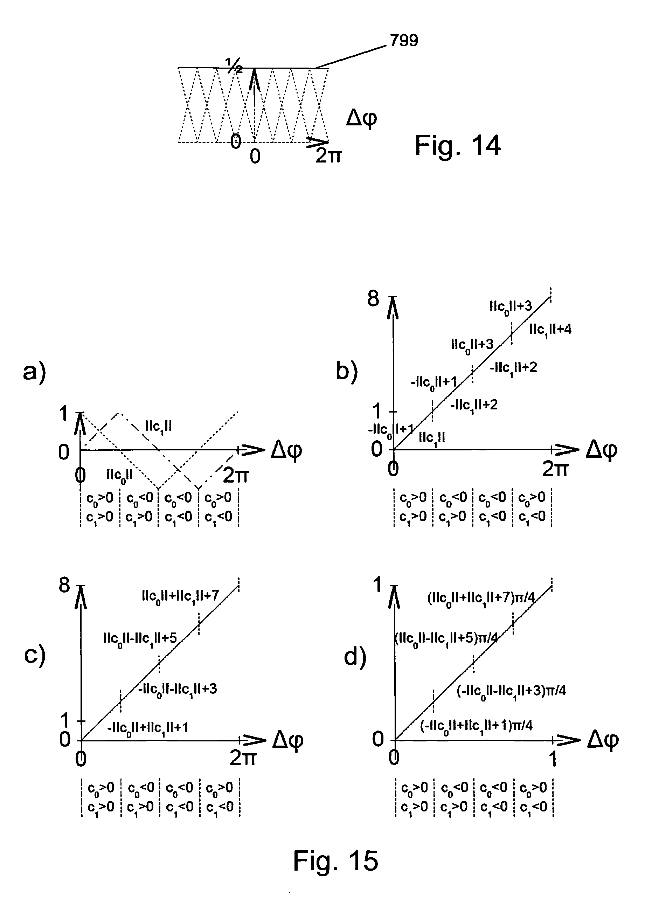

Im Folgenden soll zunächst der allgemeine Zusammenhang der Messungen erläutert werden bevor auf die Herleitung der linearen Funktion in Fig. 15 eingegangen wird.

Die gezeigten Phasenverläufe für die vom jeweiligen Modulationsgate 601, 602, 603, 604 an das jeweilige Storagegate übergebene Ladung entsprechen wegen der gleichen Summationszeit im Zeitverlauf der Ladung der Storagegates vor deren Vergleich und Subtraktion über die Zeitrampe und sind hier entsprechend Fig. 4. beispielhaft für eine Phasendifferenz von Pi/2 zwischen ausgesandter und empfangener Strahlung dargestellt.

Fig. 6, 7, 10, 11 zeigen nun den Verlauf der Menge der angehäuften Ladung unter den Storagegates, d.h. den Verlauf der Korrelationswerte 611, 622, 633, 644 in Abhängigkeit der Verzögerung, d.h. der Phasenverschiebung, d.h. der Phasendifferenz zwischen ausgesandter und empfangener Strahlung (vergleiche 201 und 401 in Fig. 4 als Beispiel), d.h. in Abhängigkeit von der Entfernung zum Objekt.

Fig. 8 und Fig. 12 zeigt nun den durch Differenzbildung aus den Korrelationswerten derselben Messphase entstehenden Verlauf des aus der jeweiligen Messphase resultierenden Differenzkorrelationswertes 701 und 702 in Abhängigkeit von der Phasendifferenz zwischen ausgesandter und empfangener Strahlung. Der Verlauf des Differenzkorrelationswerts 701 (Fig. 8) geht dabei aus der Differenz der Verläufe der Korrelationswerte 611 und 622 (Fig. 6 und Fig. 7) hervor. Der Verlauf des Differenzkorrelationswerts 702 (Fig. 12) geht dabei aus der Differenz der Verläufe der Korrelationswerte 633 und 644 (Fig. 10 und Fig. 11) hervor.

Fig. 14 zeigt die Addition der Absolutbeträge der Verläufe der beiden Differenzkorrelationswerte 701 und 702 in Abhängigkeit von der Phasendifferenz zwischen ausgesandter und empfangener Strahlung. Es ergibt sich ein konstanter Phasenverlauf 799 mit dem Wert 1/2. Somit ergibt die Summe der Absolutbeträge der Phasenverläufe der beiden Differenzkorrelationswerte eine geeignete Normierungsfunktion für die Differenzkorrelationswerte.

Die beiden normierten Differenzkorrelationswerte $\|C0\|$ und $\|C1\|$ ergeben sich aus den beiden Differenzkorrelationswerte C0 und C1 und der Normierungsfunktion $(|C0| + |C1|)$ wie folgt, wobei " |...| "die Absolutwertfunktion bezeichnet:

$$\|C0\| := C0 / ( |C0| + |C1| )$$

$$\|C1\| := C1 / ( |C0| + |C1| )$$

Durch diese Normierung ergibt sich der in Fig. 9 gezeigte Verlauf des normierten ersten Differenzkorrelationskoeffizienten 711 und der in Fig. 13 gezeigte Verlauf des normierten zweiten Differenzkorrelationswerts 722 jeweils in Abhängigkeit von der Phasendifferenz zwischen ausgesandter und empfangener Strahlung.

Die Normierung kann den Vorteil haben, dass systematisch bedingte Abweichungen der gemessenen Grössen nicht die errechnete Grösse verändern. Eine systematische Abweichungen kann etwa in der Veränderung der empfangenen Strahlungsintensität in Abhängigkeit von der Entfernung gegeben sein.

Fig. 15 zeigt die plausible Herleitung der linearen Funktionen.

Fig. 15a zeigt die beiden Verläufe der beiden normierten Differenzkorrelationswerte aus Fig. 9 und Fig. 13 in einer gemeinsamen Darstellung in Abhängigkeit von der Phasendifferenz zwischen ausgesandter und empfangener Strahlung.

Der Wertebereich der Phasendifferenz ist 4 Bereiche unterteilt, die jeweils unterschiedlichen Kombinationen der Vorzeichen der Differenzkorrelationswerte im Wertebereich der Phasendifferenz entsprechen.

Diese unterschiedlichen Kombinationen der Vorzeichen der Differenzkorrelationswerte bildet die Grundlage der Fallunterscheidung 801. Es ist besonders vorteilhaft, dass die jeweiligen Voreichen als Vorzeichen der gemessenen Spannung vorliegen oder als Angabe vorliegen ob das rechte oder das linke Storagegate mehr Ladung enthielt.

Fig. 15b zeigt, wie nun die Teilbereiche des Verlaufs der beiden Differenzkorrelationswerte so neu zusammengesetzt sind, dass eine monoton lineare Funktion entsteht. Die beiden Differenzkorrelationswerte werden mit C0 und C1 bezeichnet. Die beiden normierten Differenzkorrelationswerte werden mit $\|C0\|$ und $\|C1\|$ bezeichnet. Für die 4 Bereiche ergeben sich die Summen dPhi zu:

$$C0 > 0 \text{ und } C1 > 0 \implies dPhi = - \|C0\| + 1 + \|C1\|$$

$$C0 < 0 \text{ und } C1 > 0 \;\; => \;\; dPhi = - \; \|C0\| + 1 - \|C1\| + 2$$

$$C0 < 0 \text{ und } C1 < 0 \;\; => \;\; dPhi = + \; \|C0\| + 3 - \|C1\| + 2$$

$$C0 > 0 \text{ und } C1 < 0 \;\; => \;\; dPhi = + \; \|C0\| + 3 + \|C1\| + 4$$

Die vier Bereiche erstrecken sich insgesamt über den Phasenbereich von 0 bis Pi und die Summen von 0 bis 8 in insgesamt konstant linearer Weise.

Fig. 15c zeigt den gleichen Phasenverlauf wie Fig. 15b.

Fig. 15d zeigt den Phasenverlauf wie Fig. 15b wobei der Phasenbereich und der Wertebereich jeweils auf 1 normiert sind. Für die 4 Bereiche ergeben sich nun die Summen zu:

$$C0 > 0 \text{ und } C1 > 0 \;\; => \;\; dPhi = (- \|C0\| + \|C1\| + 1) * ( Pi / 4 )$$

$$C0 < 0 \text{ und } C1 > 0 \;\; => \;\; dPhi = (- \|C0\| - \|C1\| + 3) * ( Pi / 4 )$$

$$C0 < 0 \text{ und } C1 < 0 \;\; => \;\; dPhi = (+ \|C0\| - \|C1\| + 5) * ( Pi / 4 )$$

$$C0 > 0 \text{ und } C1 < 0 \;\; => \;\; dPhi = (+ \|C0\| + \|C1\| + 7) * ( Pi / 4 )$$

Damit ergeben sich die Summen nach Bereinigung der Voreichen zu:

$$C0 > 0 \text{ und } C1 > 0 \;\; => \;\; dPhi = ( ( (C1–C0) / (C0+C1) ) + 1 ) * ( Pi / 4 )$$

$$C0 < 0 \text{ und } C1 > 0 \;\; => \;\; dPhi = ( ( (C1+C0) / (C0–C1) ) + 3 ) * ( Pi / 4 )$$

$$C0 < 0 \text{ und } C1 < 0 \;\; => \;\; dPhi = ( ( (C1+C0) / (C1–C0) ) + 5 ) * ( Pi / 4 )$$

$$C0 > 0 \text{ und } C1 < 0 \;\; => \;\; dPhi = ( ( (C1–C0) / (C0+C1) ) + 7 ) * ( Pi / 4 )$$

Dies sind die linearen Funktionen, um einen Distanzwert aus beliebigen Differenzkorrelationswerten aus der oben bereits angegebenen Formel

$$D = ( c / ( 4 * Pi * f ) ) * dPhi$$

zu bestimmen.

Bezugszeichenliste:

10  TOF Entfernungssensor
11  Träger
12  Gehäuse

13    Elektronikeinrichtung
20    Strahlungsquelle
21    Ausgesandte Strahlung
30    Objekt
31    Reflektierte Strahlung
40    Empfangseinrichtung
41    Blende
42    Halbleitersubstrat
43    Elektronen-Lochpaare
44    Driftgate
45    Photoelektronen
60    Korrelationseinrichtung
61    Modulationsgate
62    Storagegate
70    Differenzbildungseinrichtung
71    Transfergate
72    Floating Diffusion
80    Berechnungseinrichtung

100   Erzeugung Rechtecksignal
200   Lichtaussendung
300   Reflexion
400   Lichtempfang
500   Bildung von 4 Korrelationssignalen
600   Korrelation
700   Differenzbildung
800   Berechnung
801   Fallunterscheidung
802   Berechnung mit konstanter linearer Funktionen
900   Ausgabe eines Entfernungsmasses

101   Modulationssignal
201   Ausgesendetes Lichtsignal
401   Empfangenes Lichtsignal (Beispiel)
501   Korrelationssignal 1 (ohne Phasenverschiebung)
502   Korrelationssignal 2 (Phasenverschiebung Pi)
503   Korrelationssignal 3 (Phasenverschiebung 1/2 Pi)
504   Korrelationssignal 4 (Phasenverschiebung (3/2 Pi)
601   Korrelationswert 1 (Beispiel)
602   Korrelationswert 2 (Beispiel)
603   Korrelationswert 3 (Beispiel)
604   Korrelationswert 4 (Beispiel)
611   Korrelationswert 1
622   Korrelationswert 2
633   Korrelationswert 3
644   Korrelationswert 4
701   Differenzkorrelationswert 1
711   Differenzkorrelationswert 1 normiert
702   Differenzkorrelationswert 2
722   Differenzkorrelationswert 2 normiert
799   Normierungsfünktion

**Patentansprüche**

1.  TOF Entfernungssensor (10)

      - zur Messung einer Entfernung zu einem Objekt (30), umfassend

- eine Elektronikeinrichtung (13)

  - zur Erzeugung eines Modulationssignals (101) und
  - zur Erzeugung von 4 Korrelationssignalen (501, 502, 503, 504)

    - welche gegeneinander phasenverschoben sind
    - und die gleiche Periodenlänge wie das Modulationssignal aufweisen;

- eine Strahlungsquelle (20)

  - zum Aussenden von Strahlung (21),
  - die mit dem Modulationssignal (101) moduliert ist;

- eine Empfangseinrichtung (40)

  - die in vorbestimmtem räumlichen Bezug zur Strahlungsquelle (20) steht
  - zum Empfang von vom Objekt reflektierter Strahlung (31);

- eine Korrelationseinrichtung(60)

  - zur Korrelation der empfangenen Strahlung oder einer entsprechenden Grösse
  - mit jeweils einem der 4 Korrelationssignale
  - zur Bildung von 4 entsprechenden Korrelationswerten (601, 602, 603, 604; 611, 622, 633, 644);

- eine Differenzbildungseinrichtung (70)

  - zur Bildung von 2 Differenzkorrelationswerten (701, 702; 711, 722) aus der Differenz zwischen jeweils 2 der Korrelationswerten;

- eine Berechnungseinrichtung, die dazu ausgebildet ist,

  - die Entfernung in vorbestimmter linearer Abhängigkeit
  - von den 2 Differenzkorrelationswerten zu berechnen,

wobei- die Empfangseinrichtung (40)

  - ein Substrat (42) mit photosensitiven Bereich zur Erzeugung von Signalträgern, insbesondere von Photoelektronen umfasst und
  - ein Driftgate (44) zur Erzeugung eines Driftfeldes zum Transport der Signalträger umfasst; und wobei

- die Korrelationseinrichtung (60) mindestens

  - ein Modulationsgate (61) zur Korrelation der empfangenen Strahlung mit wenigstens einem der Korrelationssignale umfasst, indem eine räumliche Trennung der Signalträger in Abhängigkeit von einem der Korrelationssignale vorgenommen wird und mindestens
  - ein Storagegate (62) zur zeitlichen Aufsummierung der entsprechend eines Korrelationssignals räumlich getrennten Signalträger zur Bildung eines der Korrelationswerte umfasst und mindestens

- ein Speicherelement zur Aufnahme eines anderen Korrelationswerts, insbesondere ein weiteres Storagegate umfasst,

**dadurch gekennzeichnet,**

  - **dass** die Korrelationseinrichtung

    - zwei Modulationsgates zur räumlichen Trennung der Signalträger in zeitlicher Korrelation mit jeweils einem unterschiedlichen Korrelationssignal umfasst und- zwei den Modulationsgates zugeordneten Storagegates zur getrenntem Aufsummierung der getrennten Signalträger umfasst und

- die Differenzbildungseinrichtung

- zwei den Storagegates zugeordnete Transfergates und/oder Floating Diffusions (72) und/oder Source Follower umfasst zur getrennten Auslese und Umwandlung der unter den Storagegates getrennten und aufsummierten Signalträger in zwei den jeweiligen Storagegates zugeordneten Spannungswerten und
- eine Rampeneinrichtung umfasst welche die Signalträger unter einem ersten der zwei Storagegates vor der Auslese und Umwandlung mittels einer Zeitrampe durch parallele schrittweise oder kontinuierliche Veränderung der Potentiale der beiden Storagegates über das entsprechende Transfergate in das entsprechende erste der zwei Floating Diffusion solange abfliessen lässt bis das Potential der zweiten Floating Diffusion sich zu ändern beginnt , wobei

- die Differenzbildungseinrichtung dazu ausgebildet ist,

- die Differenzkorrelationswerte in Analogform in der Ladungsdomäne,
- durch das Betreiben der Rampeneinrichtungzu bilden, sodass die Menge der Ladung derjenigen Floating Diffusion (72), die dem stärker geladenen Storagegate zugeordnet ist, einem Differenzkorrelationswert entspricht.

2. TOF Entfernungssensor nach Anspruch 1, **dadurch gekennzeichnet, dass** das Modulationssignal (101) und/oder die 4 Korrelationssignale (501, 502, 503, 504) als Rechtecksignale ausgebildet sind,

3. TOF Entfernungssensor nach einem der vorhergehenden Ansprüche, **dadurch gekennzeichnet, dass** die Korrelationssignale (501, 502, 503, 504) jeweils um eine viertel Periode gegeneinander phasenverschoben sind und/oder ein Korrelationssignal phasengleich mit dem Modulationssignal ist.

4. TOF Entfernungssensor nach einem der vorhergehenden Ansprüche **dadurch gekennzeichnet, dass** die Differenzbildungseinrichtung (70) dazu ausgebildet ist, die Differenz jeweils aus Korrelationswerten zu bilden, deren zugeordneten Korrelationssignale um eine halbe Periode phasenverschoben sind.

5. TOF Entfernungssensor nach einem der vorhergehenden Ansprüche, **dadurch gekennzeichnet, dass** die Berechnungseinrichtung (80) dazu ausgebildet ist,

- zur Zuordnung zu mindestens 2 unterschiedlichen linearen Abhängigkeiten in Abhängigkeit von den 2 Differenzkorrelationswerten und
- zur Berechnung der Entfernung in Abhängigkeit von der Zuordnung.

6. TOF Entfernungssensor nach einem der vorhergehenden Ansprüche, **dadurch gekennzeichnet, dass** mehrere Empfangssensoren (40) vorhanden sind die eine Pixelmatrix Ausbildung zur Erzeugung eines 3D-Bildes.

7. TOF Entfernungssensor nach einem der vorhergehenden Ansprüche, **dadurch gekennzeichnet, dass** die Empfangseinrichtung ein schwach dotiertes Halbleitersubstrat als photosensitiven Bereich zur Erzeugung von Signalträgern umfasst.

8. TOF Entfernungssensor nach einem der vorhergehenden Ansprüche, **dadurch gekennzeichnet, dass** die Differenzbildungseinrichtung einen A/D-Wandler zur Bildung eines Wertes für einen Differenzkorrelationswert aus dem Spannungswert der ersten Floating Diffusion umfasst.

9. Verfahren zum Betrieb eines Entfernungssensors (10) mit den Verfahrensschritten

- Aussenden von Strahlung (21)

- aus einer Lichtquelle (20)
- wobei die Strahlung mit einem Modulationssignal (101) moduliert ist;

- Empfangen der ausgesandten Strahlung

- die von einem Objekt (30) reflektiert wurde
- mit einem Empfangssensor (40), der ein Substrat (42) mit photosensitiven Bereich zur Erzeugung von Signalträgern, insbesondere von Photoelektronen und ein Driftgate (44) zur Erzeugung eines Driftfeldes zum Transport der Signalträger umfasst und

der mit der Lichtquelle in einem vorbestimmten räumlichen Bezug steht;
- Bildung von 4 Korrelationssignalen (501, 502, 503, 504)

   - die gegeneinander phasenverschoben sind und
   - die gleiche Periodenlänge wie das Modulationssignal aufweisen;

- Korrelation der (60) empfangenen Strahlung oder einer äquivalenten Grösse

   - mit den 4 Korrelationssignalen
   - zur Bildung von 4 Korrelationswerten, wobei die Korrelation über eine Korrelationseinrichtung mit mindestens einem Modulationsgate (61) zur Korrelation der empfangenen Strahlung mit wenigstens einem der Korrelationssignale durchgeführt wird, indem eine räumliche Trennung der Signalträger in Abhängigkeit von einem der Korrelationssignale vorgenommen wird; wobei ein zeitliches Aufsummieren der entsprechend eines Korrelationssignals räumlich getrennten Signalträger über ein Storagegate (62) zur Bildung eines der Korrelationswerte und eine Aufnahme eines anderen Korrelationswerts durch mindestens ein Speicherelement insbesondere ein weiteres Storagegate durchgeführt werden;

- Differenzbildung (70) zwischen jeweils 2 Korrelationswerten

   - zur Bildung von 2 Differenzkorrelationswerten;

- Berechnung (80) der Entfernung zum Objekt

   - in linearer Abhängigkeit
   - von den beiden Differenzkorrelationswerten (701, 702; 711, 722)

**dadurch gekennzeichnet, dass**

- eine räumliche Trennung der Signalträger durch zwei Modulationsgates in zeitlicher Korrelation mit jeweils einem unterschiedlichen Korrelationssignal erfolgt und eine Aufsummierung der getrennten Signalträger durch zwei den Modulationsgates zugeordneten Storagegates erfolgt, wobei

eine getrennte Auslese und Umwandlung der unter den Storagegates getrennten und aufsummierten Signalträger in zwei den jeweiligen Storagegates zugeordneten Spannungswerten durch zwei den Storagegates zugeordneten Transfetgates und/der Floating Diffusions (72) und/oder Source Follower erfolgt und

- die Differenzbildung analog in der Ladungsdomäne erfolgt,
durch die Korrelation der empfangenen Strahlung mit den 4 Korrelationssignalen durch räumliche Trennung der durch die Strahlung erzeugten Signalträger zur Bildung von 2 den Korrelationswerten entsprechenden 2 Ladungsmengen in der Ladungsdomäne und durch Abschöpfen von Ladung von einer der 2 Ladungsmengen bis die 2 Ladungsmengen gleich sind, sodass die abgeschöpfte Ladungsmenge dem Differenzkorrelationswert entspricht, wobei die Differenzkorrelationswerte durch

eine Rampeneinrichtung gebildet werden, welche die Signalträger unter einem ersten der zwei Storagegates vor der Auslese und Umwandlung mittels einer Zeitrampe durch parallele schrittweise oder kontinuierliche Veränderung der Potentiale der beiden Storagegates über das entsprechende Transfergate in das entsprechende erste der zwei Floating Diffusion solange abfliessen lässt bis das Potential der zweiten Floating Diffusion sich zu ändern beginnt, sodass die Menge der Ladung derjenigen Floating Diffusion (72), die dem stärker geladenen Storagegate zugeordnet ist, einem Differenzkorrelationswert entspricht.

**10.** Verfahren nach Anspruch 9, **dadurch gekennzeichnet, dass** das Modulationssignal und/oder die 4 Korrelationssignale (501, 502, 503, 504) als Rechtecksignal ausgebildet sind,

**11.** Verfahren nach einem der Ansprüche 9 bis 10, **dadurch gekennzeichnet, dass** die Korrelationssignale (501, 502, 503, 504) jeweils um eine viertel Periode gegeneinander phasenverschoben sind und/oder ein Korrelationssignal phasengleich mit dem Modulationssignal ist.

12. Verfahren nach einem der Ansprüche 9 bis 11, **dadurch gekennzeichnet, dass** die Differenz jeweils aus Differenzkorrelationswerten gebildet wird, deren zugeordneten Korrelationssignale um eine halbe Periode phasenverschoben sind.

13. Verfahren nach einem der Ansprüche 9 bis 12, mit dem Verfahrensschritt Fallunterscheidung in Abhängigkeit von den 2 Differenzkorrelationswerten zur Zuordnung der Berechnung zu einer von 4 unterschiedlichen linearen Abhängigkeiten.

**Claims**

1. TOF distance sensor (10)

    - for measuring a distance from an object (30), comprising
    - an electronic device (13)
    - for generating a modulation signal (101) and
    - for generating four correlation signals (501, 502, 503, 504)
    - which are phase-shifted with respect to one another
    - and which have the same period as the modulation signal;
    - a radiation source (20)

        - for emitting radiation (21),
        - which is modulated by the modulation signal (101);

    - a receiving device (40)

        - which has a predetermined spatial relationship with respect to the radiation source (20)
        - for receiving radiation (31) reflected by the object;

    - a correlation device (60)

        - for correlating the received radiation or a corresponding variable
        - with respectively one of the four correlation signals
        - to form four corresponding correlation values (601, 602, 603, 604; 611, 622, 633, 644);

    - a difference-forming device (70)

        - for forming two difference correlation values (701, 702; 711, 722) from the difference between respectively two of the correlation values;

    - a calculation device which is designed,

        - to calculate the distance with predetermined linear dependence
        - on the two difference correlation values,

    wherein

        - the receiving device (40)
        - comprises a substrate (42) with a photosensitive region for generating signal carriers, more particularly photoelectrons, and
        - a drift gate (44) for generating a drift field for transporting the signal carriers; and

    wherein
    - the correlation device (60) comprises at least

        - one modulation gate (61) for correlating the received radiation with at least one of the correlation signals as a spatial separation of the signal carriers is performed in a dependence with one of the correlation signals, and at least
- one storage gate (62) for summing over time the signal carriers, spatially separated with respect to one correlation signal respectively for forming one of the correlation values, and at least

- one storage element for holding another correlation value, more particularly a further storage gate,

**characterised in that**,

- the correlation device

- comprises two modulation gates for the spatial separation of the signal carriers in temporal correlation with respectively one different correlation signal and comprises two storage gates associated with the modulation gates for separate summing of the separated signal carriers and

- the difference-forming device

- comprises two transfer gates associated with the storage gates and/or floating diffusions (72) and/or source followers for the separate read-out and conversion of the signal carriers separated and summed up under the storage gates in two voltage values associated with the respective storage gates and
- comprises a ramp device which allows the signal carriers to drain below a first of the two storage gates prior to the read-out and conversion by means of a time slope by the parallel and step-wise or continuous change of the potentials of the two storage gates through the corresponding first of the two floating diffusions until the potential of the second floating diffusion starts to change, wherein

- the difference-forming device is designed

- to form the difference correlation values in analogue form in the charge domain by operating the ramp device so that the amount of charge of that floating diffusion (72) which is associated with the more strongly charged storage gate corresponds to a difference correlation value.

2. TOF distance sensor according to claim 1, **characterised in that** the modulation signal (101) and/or the four correlation signals (501, 502, 503 ,504) are designed as square signals.

3. TOF distance sensor according to one of the preceding claims, **characterised in that** the correlation signals (501, 502, 503 ,504) are each phase-shifted by a quarter period with respect to each other and/or a correlation signal is in the same phase as the modulation signal.

4. TOF distance sensor according to one of the preceding claims, **characterised in that** the difference-forming device (70) is designed to form the difference in each case from correlation values whose associated correlation signals are phase-shifted by a half period.

5. TOF distance sensor according to one of the preceding claims, **characterised in that** the calculation device (80) is designed

- for the association to at least two different linear dependencies depending on the two difference correlation values and
- for calculating the distance depending on the association

6. TOF distance sensor according to one of the preceding claims, **characterised in that** a multiplicity of receiving sensors (40) are present which form a pixel matrix to generate a 3D image.

7. TOF distance sensor according to one of the preceding claims, **characterised in that** the receiving device comprises a weakly doped semiconductor substrate as a photosensitive region for generating signal carriers.

8. TOF distance sensor according to one of the preceding claims, **characterised in that** the difference-forming device comprises an A/D converter for forming a value for a difference correlation value from the voltage value of the first floating diffusion.

9. Method for operating a distance sensor (10) with the following steps

    - emitting radiation (21)

        - from a light source (20)
        - wherein the radiation is modulated with a modulation signal (101);
        - receiving the emitted radiation
        - which was reflected by an object (30)
        - with a receiving sensor (40) comprising a substrate (42) with a photosensitive region for generating signal carriers, more particularly photoelectrons, and a drift gate (44) for generating a drift field for transporting the signal carriers, and

    which has a predetermined spatial relationship with the light source;
    - forming the four correlation signals (501, 502, 503, 504)

        - which are phase-shifted with respect to each other and
        - which have the same period as the modulation signal;

    - correlating the (60) received radiation or an equivalent variable

        - with the four correlation signals
        - to form four correlation values, wherein the correlation is performed by means of a correlation device with at least one modulation gate (61) for correlating the received radiation with at least one of the correlation signals as a spatial separation of the signal carriers is performed depending on one of the correlation signals; wherein a summation over time is performed by a storage gate (62) of the signal carriers spatially separated with respect to one correlation signal respectively for forming one of the correlation values and another correlation value is held by at least one storage element, more particularly a further storage gate;

    - forming a difference (70) between respectively two correlation values

        - to form two difference correlation values;

    - calculating (80) the distance to the object

        - in linear dependency
        - on both difference correlation values (701, 702; 711, 722)

**characterised in that**

    - a spatial separation of the signal carriers takes place by means of two modulation gates in temporal correlation with respectively one different correlation signal and summation of the separated signal carriers by two storage gates associated with the modulation gates, wherein

a separate read-out and conversion of the signal carriers separated and summed under the storage gates takes place into two voltage values associated with the storage gates and/or of the floating diffusions (72) and/or of the source followers and

    - the difference formation as in the charging domain takes place,
by the correlation of the received radiation with the four correlation signals by spatial separation of the signal carriers generated by the radiation for forming two charging amounts corresponding to two of the correlation values in the charge domain and by siphoning off charge from one of the two charge amounts until the two charge amounts are equal, so that the siphoned-off charge amount corresponds to the difference correlation value, wherein the difference correlation values

are formed by a ramp device which allows the signal carriers to drain below a first of the two storage gates prior to the read-out and conversion by means of a time slope by the parallel and step-wise or continuous change of the potentials of the two storage gates through the corresponding first of the two floating diffusions until the potential of the second floating diffusion starts to change,

so that the amount of charge of that floating diffusion (72) which is associated with the more strongly charged storage gate corresponds to a difference correlation value.

10. Method according to claim 9, **characterised in that** the modulation signal and/or the four correlation signals (501, 502, 503, 504) are designed as square signals.

11. Method according to one of claims 9 to 10, **characterised in that** the correlation signals (501, 502, 503 ,504) are each phase-shifted by a quarter period with respect to each other and/or a correlation signal is in the same phase as the modulation signal.

12. Method according to one of claims 9 to 11, **characterised in that** the difference in each case is formed from difference correlation values whose associated correlation signals are phase-shifted by a half period.

13. Method according to one of claims 9 to 12, with the step to distinguish between cases dependent on the two difference correlation values for allocating the calculation to one of four different linear dependencies.


**Revendications**

1. Capteur de distance TOF (10)

   - pour mesurer une distance par rapport à un objet (30), comprenant
   - un dispositif électronique (13)

      - pour générer un signal de modulation (101) et
      - pour générer quatre signaux de corrélation (501, 502, 503, 504)

         - lesquels sont déphasés les uns par rapport aux autres
         - et présentent la même durée de période que le signal de modulation ;

   - une source de rayonnement (20)

      - pour émettre un rayonnement (21),
      - qui est modulé au moyen du signal de modulation (101) ;

   - un dispositif de réception (40)

      - qui se trouve dans une relation spatiale prédéterminée avec la source de rayonnement (20)
      - pour recevoir un rayonnement (31) réfléchi par l'objet,

   - un dispositif de corrélation (60)

      - pour corréler le rayon reçu ou une grandeur correspondante
      - avec respectivement un des quatre signaux de corrélation
      - en vue de former quatre valeurs de corrélation correspondantes (601, 602, 603, 604 ; 611, 622, 633, 644) ;

   - un dispositif soustracteur (70)

      - pour former deux valeurs de différence de corrélation (701, 702 ; 711, 722) à partir de la différence entre respectivement deux des valeurs de corrélation ;

   - un dispositif de calcul qui est conçu pour

      - calculer la distance dans une dépendance linéaire prédéterminée
      - des deux valeurs de différence de corrélation,

   dans lequel

- le dispositif de réception (40)

- comprend un substrat (42) avec une zone photosensible pour générer des porteurs de signal, en particulier des photoélectrons et
- une grille de dérive (44) destinée à générer un champ de dévire pour transporter les porteurs de signal ; et dans lequel

- le dispositif de corrélation (60)

- comprend au moins une grille de modulation (61) destinée à corréler le rayonnement reçu avec au moins un des signaux de corrélation en effectuant une séparation spatiale des porteurs de signal en fonction d'un des signaux de corrélation et
- comprend au moins une grille de mise en mémoire (62) destinée à la totalisation dans le temps des porteurs de signal séparés spatialement conformément à un signal de corrélation en vue de former une des valeurs de corrélation, et

- comprend au moins un élément de mise en mémoire destinée à enregistrer une autre valeur de corrélation, en particulier une autre grille de mise en mémoire,

**caractérisé en ce que**

- le dispositif de corrélation

- comprend deux grilles de modulation servant à la séparation spatiale des porteurs de signal en corrélation temporelle avec respectivement un signal de corrélation différent et comprend deux grilles de mise en mémoire associées aux grilles de modulation pour la totalisation séparée des porteurs de signal séparés et

- le dispositif soustracteur

- comprend des diffusions flottantes (72) et/ou un drain commun et/ou deux grilles de transfert associés aux grilles de mise en mémoire pour la consultation et la conversion séparées des porteurs de signal séparés et totalisés sous les grilles de mise en mémoire en deux valeurs de tension associées aux grilles de mise en mémoire respectives, et
- comprend un dispositif à rampe qui laisse s'écouler les porteurs de signal sous une première des deux grilles de mise en mémoire avant la consultation et la conversion au moyen d'une rampe temporelle en modifiant en parallèle pas à pas ou de façon continue les potentiels des deux grilles de mise en mémoire par l'intermédiaire de la grille de transfert correspondante dans la première des deux diffusions flottantes correspondantes jusqu'à ce que le potentiel de la deuxième diffusion flottante commence à se modifier,

- le dispositif soustracteur étant conçu pour

- former la valeur de corrélation de différence de façon analogique dans le domaine de charge,
- en utilisant le dispositif à rampe de sorte que la quantité de la charge de la diffusion flottante (72) qui est associée à la grille de mise en mémoire la plus fortement chargée, corresponde à une valeur de corrélation de différence.

2. Capteur de distance TOF selon la revendication 1, **caractérisé en ce que** le signal de modulation (101) et/ou les quatre signaux de corrélation (501,502, 503, 504) sont sous la forme de signaux rectangulaires.

3. Capteur de distance TOF selon l'une des revendications précédentes, **caractérisé en ce que** les signaux de corrélation (501, 502, 503, 504) sont déphasés les uns par rapport aux autres à chaque fois d'un quart de période et/ou un signal de corrélation est en phase avec le signal de modulation.

4. Capteur de distance TOF selon l'une des revendications précédentes, **caractérisé en ce que** le dispositif soustracteur (70) est conçu pour former la différence entre des valeurs de corrélation dont les signaux de corrélation associés sont déphasés d'une demi-période.

5. Capteur de distance TOF selon l'une des revendications précédentes, **caractérisé en ce que** l'unité de calcul (80) est conçue

- pour l'association à au moins deux dépendances linéaires différentes en fonction des deux valeurs de corrélation différentes et
- pour le calcul de la distance en fonction de l'association.

6. Capteur de distance TOF selon l'une des revendications précédentes, **caractérisé en ce que** plusieurs capteurs de réception (40) sont prévus qui forment une matrice de pixels en vue de générer une image 3D.

7. Capteur de distance TOF selon l'une des revendications précédentes, **caractérisé en ce que** le dispositif de réception comprend un substrat semi-conducteur faiblement doté en tant que zone photosensible destinée à générer les porteurs de signal.

8. Capteur de distance TOF selon l'une des revendications précédentes, **caractérisé en ce que** le dispositif soustracteur comprend un convertisseur A/D destiné à former une valeur pour une valeur de corrélation de différence à partir de la valeur de tension de la première diffusion flottante.

9. Procédé pour l'utilisation d'un capteur de distance (10) avec les étapes de procédé suivantes :

- Émission d'un rayonnement (21)

- à partir d'une source de lumière (20)
- le rayonnement étant modulé avec un signal de modulation (101) ;

- Réception du rayonnement envoyé

- qui a été réfléchi par un objet (30),
- au moyen d'un capteur de réception (40) qui comprend un substrat (42) avec une zone photosensible pour générer des porteurs de signal, en particulier des photoélectrons, et une grille de dérive (44) destinée à générer un champ de dérive pour transporter les porteurs de signal, et

qui se trouve dans une relation spatiale prédéterminée avec la source de lumière ;
- Formation de quatre signaux de corrélation (501, 502, 503, 504)

- qui sont déphasés les uns par rapport aux autres et
- qui présentent la même durée de période que le signal de modulation ;

- Corrélation du (60) rayonnement reçu ou d'une grandeur équivalente

- avec les quatre signaux de corrélation
- en vue de former quatre valeurs de corrélation, la corrélation étant réalisée par l'intermédiaire d'un appareil de corrélation avec au moins une grille de modulation (61) destinée à corréler le rayonnement reçu avec au moins un des signaux de corrélation en effectuant une séparation spatiale des porteurs de signal en fonction d'un des signaux de corrélation ; une totalisation dans le temps des porteurs de signal séparés spatialement conformément à un signal de corrélation en vue de former l'une des valeurs de corrélation et un enregistrement d'une autre valeur de corrélation étant réalisés par au moins un élément de mise en mémoire, en particulier par une grille de mise en mémoire supplémentaire;

- Formation de la différence (70) entre respectivement deux valeurs de corrélation

- pour former deux valeurs de différence de corrélation ;

- Calcul (80) de la distance de l'objet

- en dépendance linéaire
- des deux valeurs de différence de corrélation (701, 702 ; 711, 722)

**caractérisée en ce que**

- une séparation spatiale des porteurs de signal est réalisée par deux grilles de modulation en corrélation temporelle avec à chaque fois un signal de corrélation différent et une totalisation des porteurs de signal séparés est réalisées par deux grilles de mise en mémoire associées aux grilles de modulation,

une consultation et une conversion séparées des porteurs de signal séparés et totalisés sous les grilles de mise en mémoire en deux valeurs de tension associées aux grilles de mise en mémoire correspondantes par des diffusions flottantes (72) et/ou des drains communs et/ou deux grilles de transfert associés aux grilles de mise en mémoire, et

- la formation de la différence est réalisée de façon analogique dans le domaine de charge,
par la corrélation du rayonnement reçu avec les quatre valeurs de corrélation par séparation spatiale des supports de signal générés par le rayonnement en vue de former deux quantités de charges correspondantes aux deux valeurs de corrélation dans le domaine de charge et par prélèvement de charge d'une des deux quantités de charge jusqu'à ce que les deux quantités de charge soient égales de sorte que la quantité de charge prélevée corresponde à la valeur de différence de corrélation, la valeur de différence de corrélation étant formée par

un dispositif à rampe qui laisse s'écouler les porteurs de signal sous une première des deux grilles de mise en mémoire avant la consultation et la conversion au moyen d'une rampe temporelle en modifiant en parallèle pas à pas ou de façon continue les potentiels des deux grilles de mise en mémoire par l'intermédiaire de la grille de transfert correspondante dans la première des deux diffusions flottantes correspondantes jusqu'à ce que le potentiel de la deuxième diffusion flottante commence à se modifier,
de sorte que la quantité de la charge de la diffusion flottante (72) qui est associée à la grille de mise en mémoire la plus fortement chargée corresponde à une valeur de corrélation de différence.

10. Procédé selon la revendication 9, **caractérisé en ce que** le signal de modulation et/ou les quatre signaux de corrélation (501, 502, 503, 504) sont sous la forme de signaux rectangulaires.

11. Procédé selon l'une des revendications 9 à 10, **caractérisé en ce que** les signaux de corrélation (501, 502, 503, 504) sont déphasés les uns par rapport aux autres à chaque fois d'un quart de période et/ou un signal de corrélation est en phase avec le signal de modulation.

12. Procédé selon l'une des revendications 9 à 11, **caractérisé en ce que** la différence est formée à partir des valeurs de différence de corrélation dont les signaux de corrélation associés sont déphasés d'une demi-période.

13. Procédé selon l'une des revendications 9 à 12 avec l'étape consistant à distinguer les cas en fonction des deux valeurs de différence de corrélation en vue d'associer le calcul à l'une des quatre dépendances linéaires différentes.

Fig. 1

Fig. 2

Fig. 3

Fig. 4

Fig. 5

Fig. 6

Fig. 7

Fig. 8

Fig. 9

$\Phi / \Phi_{max}$ ← 400

$\Phi / \Phi_{max}$ ← 400

$Trig_{li,\pi/2}$ ← 503

$Trig_{re,3/2\pi}$ ← 504

$I_l / I_{l,max}$ ← 603

$I_r / I_{r,max}$ ← 604

$Q_{li,\pi/2}^{SG}$ ← 633

$Q_{re,3/2\pi}^{SG}$ ← 644

## Fig. 10

## Fig. 11

$\Delta Q_{\pi/2,-3/2\pi}^{SG}$ ← 702

## Fig. 12

$\| \Delta Q_{\pi/2,-3/2\pi}^{SG} \|$ ← 722

## Fig. 13

27

799

½

0

0 2π

Δφ

Fig. 14

a)

1

0

0

IIc₁II

IIc₀II

2π

Δφ

| c₀>0 | c₀<0 | c₀<0 | c₀>0 |
|---|---|---|---|
| c₁>0 | c₁>0 | c₁<0 | c₁<0 |

b)

8

IIc₀II+3

IIc₁II+4

IIc₀II+3

-IIc₁II+2

-IIc₀II+1

-IIc₁II+2

1

-IIc₀II+1

IIc₁II

0

0 2π

Δφ

| c₀>0 | c₀<0 | c₀<0 | c₀>0 |
|---|---|---|---|
| c₁>0 | c₁>0 | c₁<0 | c₁<0 |

c)

8

IIc₀II+IIc₁II+7

IIc₀II-IIc₁II+5

-IIc₀II-IIc₁II+3

1

-IIc₀II+IIc₁II+1

0

0 2π

Δφ

| c₀>0 | c₀<0 | c₀<0 | c₀>0 |
|---|---|---|---|
| c₁>0 | c₁>0 | c₁<0 | c₁<0 |

d)

1

(IIc₀II+IIc₁II+7)π/4

(IIc₀II-IIc₁II+5)π/4

(-IIc₀II-IIc₁II+3)π/4

(-IIc₀II+IIc₁II+1)π/4

0

0 1

Δφ

| c₀>0 | c₀<0 | c₀<0 | c₀>0 |
|---|---|---|---|
| c₁>0 | c₁>0 | c₁<0 | c₁<0 |

Fig. 15

**EP 2 743 724 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2008164496 B